# NEUE EUROPÄISCHE PATENTSCHRIFT

(11) **EP 1 234 865 B2**
(45) Veröffentlichungstag und Bekanntmachung des Hinweises auf die Entscheidung über den Einspruch: **19.12.2012**
(45) Hinweis auf die Patenterteilung: 18.04.2007
(21) Anmeldenummer: 02002604.3
(22) Anmeldetag: 05.02.2002
(51) Int. Cl.: C09J 133/06, C09J 7/02

(54) **Ausgasungsarme Acrylathaftklebemassen**
Low-fogging acrylic adhesives
Adhésifs acryliques à faible embuage

(30) Priorität: 24.02.2001 DE 10109066
(43) Veröffentlichungstag der Anmeldung: 28.08.2002
(73) Patentinhaber: TESA SE, 20253 Hamburg (DE)
(72) Erfinder: Husemann, Marc, Dr., 22605 Hamburg (DE); Zöllner, Stephan, Dr., 22043 Hamburg (DE); Thiede, Heiko, 81669 München (DE); Storbeck, Reinhard, Dr., 22457 Hamburg (DE)

(56) Entgegenhaltungen:
- EP-A- 0 655 465
- EP-A1- 0 621 326
- WO-A-97/45184
- US-A- 5 100 728
- DATABASE WPI Section Ch, Week 199941 Derwent Publications Ltd., London, GB; Class A14, AN 1999-489022 XP002260194 & JP 11 209725 A (NITTO DENKO CORP) 3. August 1999 (1999-08-03)

## Beschreibung

Die Erfindung betrifft ein Verfahren zur Herstellung und Verarbeitung einer ausgasungsarmen Acrylathaftklebemasse, sowie ein Klebeband mit einer solchen Haftklebemasse.

In der Industrie sind Heißschmelzverfahren (Hotmeltverfahren) mit lösungsmittelfreier Beschichtungstechnik zur Herstellung von Haftklebemassen von anwachsender Bedeutung. Allgemein fördern Umweltauflagen und steigende Kosten diesen Entwicklungsprozeß. Neben SIS-Systemen (Styrol/Isopren/Styrol-Copolymere) werden zunehmend Acrylat-Polymere aus der Schmelze als Polymerschicht auf Trägermaterlallen aufgetragen. Weiterhin werden für spezielle Anwendungen Haftklebebänder mit einem sehr geringen Ausgasungsverhalten benötigt. Dies kann nur durch Hotmeltverfahren gewährleistet werden, da konventionelle Beschichtungen aus der Lösung immer noch geringe Anteile an Restlösemittel enthalten.

Im Vorlauf des Hotmeltverfahrens findet für gewöhnlich eine Lösungsmittelpolymerisation statt, welcher ein Aufkonzentrationsprozeß folgt, bei dem das Lösemittel entfernt wird. Hierfür sind verschiedene technische Verfahren bekannt.

Durch die Umstellung auf Hotmelt-Verfahren werden besondere Erfordernisse in Hinblick auf einen nachfolgenden Vemetzungsprozeß notwendig. So können z.B. thermische Vemetzungsverfahren mit Metallchelaten oder multifunktionellen Isocyanaten, die sehr populär bei den Lösungsmittelsystemen sind, nicht mehr angewendet werden. Daher forciert man zur Zeit die Vernetzung von Polyacrylathaftklebemassen durch Bestrahlung mit ultraviolettem Licht (UV) oder mit Elektronenstrahlen (ES), letztere ist die sogenannte Elektronenstrahlhärtung (ESH).

Zur Herstellung von Acrylathaftklebebändern mit einem geringenAusgasungsverhalten ist die UV-Vernetzung vorzuziehen. Die ES-Vemetzung ist ein statistischer Prozeß, der neben der eigentlichen Vemetzung der Polymerketten auch noch Fragmente erzeugt, die im Haftklebeband verbleiben und dann unter Temperaturbelastung nach der Verklebung wieder ausgasen können.

Allgemein ist die UV-Vemetzung ein apparativ wenig aufwendiges Verfahren, das nur eine einfache Beschichtungsanlage mit einigen Hg-Niederdrucklampen benötigt. Die UV-Vemetzung funktioniert sehr gut für Polyacrylatmassen mit Schichtdicken bis zu 100 g/m². Die ESH-Technologie ist dagegen bedeutend aufwendiger.

Für industrielle Anwendungen, insbesondere im Elektronikbereich, werden temperaturstabile, scherfeste und sehr ausgasungsarme Acrylathaftklebebänder benötigt. Lösungsmittel- sowie Restmonomerreste können während der Applikation bei höheren Temperaturen ausdampfen und somit zu einer Lösungsmittelhaltigen Atmosphäre führen. Dadurch können verschiedene Probleme verursacht werden. Zum einen besitzen einige Monomere eine gute Leitfähigkeit, so daß die Gefahr von Kurzschlüssen steigt Zum anderen können durch die Lösemittel bzw. Monomere Plastiktelle sowie Isolatoren zerstört werden. Daher versucht man hier sehr hochreine Acrylathaftklebebänder einzusetzen, die eine äußerst geringe Tendenz zur Ausgasung besitzen.

Im Patent US 5,681,654 wurde bereits eine Haflklebemasse mit einem sehr geringen Ausgasungsverhalten beschrieben. Diese Haftklebemasse wurde aber speziell für Anwendungen im Automobilbau entworfen, wo größere Ausgasungsmengen toleriert werden. Zudem werden in diesem Patent keine Acrylathaftklebe-, sondern Kautschukklebemassen beschrieben. Diese Elastomere weisen einige prinzipielle Nachteile gegenüber Polyacrylaten auf, wie z.B. die geringere Wärmescherfestigkeit und die Tendenz zur Alterung über die Oxidation der enthaltenden Doppelbindungen. Da im Elektronikbereich häufig Ozon (z.B. bei Kopierern) entstehen kann, sind gerade die Kautschukklebemassen für einen solchen Einsatz vollkommen ungeeignet.

Im Patent US 5,761,184 sind vibrations-dämpfende Materialien beschrieben, die ebenfalls eine geringe Tendenz zur Ausgasung besitzen. Die Grenze der tolerierbaren Ausgasung wurde aber nicht näher definiert. Ferner wurde zur Anwendung des dämpfenden Materials ein doppelseitiges Acrylathaftklebeband eingesetzt. Auch hier wurde das Haftklebeband nicht näher charakterisiert und das Ausgasungsverhalten des Verbundes untersucht.

Die DE 198 07 752 A1 führt ein foggingfreies Klebeband ein, wobei als Fogging die Kondensation von verdampften flüchtigen Bestandteilen aus der Kraftfahrzeug-Innenausstattung an den Glasscheiben bezeichnet wird. Dieses Selbstklebeband umfaßt einen foggingfreien Träger, auf dem zumindest einseitig eine foggingfreie, druckempfindliche Klebemasse aufgetragen ist. Als Klebemasse wird dabei bevorzugt eine solche auf AcrylatHotmelt-Basis eingesetzt. Für den Restlösemittelgehalt wird eine bevorzugte Grenze von maximal 1 Gew.-% angegeben.

Zusätzlich zu der oben erwähnten Entfernung des Lösungsmittels aus dem Polymerisationsprozeß ist es für spezifische Anwendung der produzierten Polyacrylatmasse daher erforderlich, eine Nachreinigung durchzuführen, bei dem neben noch vorhandenen Lösungsmittelresten auch Restmonomerreste entfernt werden. Dieser Nachreinigungsprozeß kann in Verbindung mit dem eigentlichen Aufkonzentrationsverfahren durchgeführt werden.

Einen Vorschlag für eine Nachreinigung gibt die DE 43 40 136 A1. In dieser Schrift wird ein Verfahren beschrieben, bei welchem die Entfernung des Lösungsmittels im Vakuum stattfindet, wobei gegen Ende der Destillation Schleppmittel wie Wasserdampf, Stickstoff, Argon, CO₂ bei Temperaturen von über 100 °C zugeführt werden. Für dieses Verfahren ist es allerdings notwendig, das System umzupumpen, um eine Optimierung der Polymerdurchmischung zu erzielen. Ein Nachteil dieses Verfahrens ist es, daß durch diesen Umpumpprozeß Grenzen hinsichtlich der Viskosität der aufzukonzentrierenden Lösung gegeben sind, so daß keine höherviskosen Endprodukte hergestellt werden können.

Von der BASF wurde ein relativ niedermolekulares Acrylathotmelt entwickelt, welches einen UV-Vernetzungsmechanismus besitzt [US 5,073,611]. Der copolymerisierte Benzophenonphotoinitiator ist ein Typ II Photoinitiator, der keine Fragmente während der UV-Bestrahlung und somit der Vernetzung freisetzt. Diese Haftklebemassen besitzen ein geringe Tendenz zur Ausgasung. Dennoch ist-bedingt durch das Aufkonzentrationsverfahren - der Restmonomeranteil noch zu hoch und liegt oberhalb einer bevorzugten Grenze von 10 µg/g Klebemasse.

Die DE 43 13 008 A1 und die EP 621 326 B1 beschreiben die Nutzung eines Extruders zum Aufkonzentrieren einer Selbstklebemasse auf Acrylathotmelt-Basis. Dabei wird ein Extruder zum Aufkonzentrieren bzw. Entgasen einer solchen Selbstklebemasse mit einem K-Wert von mindestens 60 zu einem als Hotmelt für ein Pflaster oder für ein technisches Klebeband verarbeitbaren System verwendet. Ferner soll in einer bevorzugten Ausführungsform der Erfindung der Restlösungsmittel-Gehalt dabei unter 1 Gew.-% sinken.

Aufgabe der Erfindung ist es, ein Verfahren zur Herstellung von Haftklebemassen insbesondere für die Anwendung im Elektrik- und im Elektronikbereich zur Verfügung zu stellen, welche die Nachteile des Standes der Technik nicht aufweisen. Insbesondere soll die Anwesenheit von Monomeren und Fragmenten, welche zu Kurzschlüssen und dergleichen führen können, für derartig eingesetzte Haftklebemassen verringert werden.

Es wurden überraschend und nicht vorhersehbar erstmalig Haftklebemassen hergestellt, bei welchen das Ausgasungsverhalten deutlich herabgesetzt ist, welche also hervorragend für den Einsatz in diesem Anwendungsbereich geeignet sind.
Überraschenderweise wurde gefunden, daß Haftklebemassen, auch auf Basis höherviskoser Polyacrylate, mit einem Anteil an restflüchtigen Bestandteilen von in Summe unter 10 µg/g (entsprechend 10 ppm) hergestellt werden können, wenn der Herstellprozeß einen Aufkonzentrationsprozeß beinhaltet, bei welchem die Aufkonzentration unter Zugabe von Schleppmitteln durch einen entsprechenden Destillationsprozeß direkt in einem Extruder durchgeführt wird. Hierdurch lassen sich auch höherviskose Polymere aufreinigen. Vorteilhaft wird die Haftklebemasse durch schonende UV-A-Strahlung vernetzt.

Entsprechend betrifft die Erfindung im Anspruch 1 ein Verfahren zur Herstellung einer Haftklebemasse aus Polymeren bzw. Copolymeren, welche zumindest überwiegend auf (Meth-)Acrylsäure oder deren Derivaten basieren, und welche einen Ausgasungswert von weniger als 10 µg/g, bezogen auf das Gewicht der Haftklebemasse, besitzt. Die Messung des Ausgasungswertes erfolgt dabei nach dem im experimentellen Teil als "tesa-Methode" bezeichneten Verfahren.

In einer ersten sehr vorteilhaften Ausführungsform ist die Haftklebemasse ein UVvemetzbares oder ein UV-vemetztes Copolymerisat, zu deren Herstellung zumindest die folgenden Monomere eingesetzt werden: 65 bis 100 Gew.-% Acrylsäure- und/oder Methacrylsäure-Derivate der allgemeinen Formel 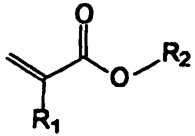 wobei R₁ = H oder CH₃ und R₂ = eine Alkylkette mit 2 bis 20 C-Atomen ist, und 0 bis 35 Gew-% Vinytverbindungen mit funktionellen Gruppen.

Als Vinylverbindungen mit funktionellen Gruppen dabei bevorzugt Acrylsäure, Methacrylsäure, Maleinsäure, Fumarsäure, Itaconsäure, Maleinsäureanhydrid, Styrol und Styrolverbindungen, Vinylester, insbesondere Vinylacetat, Vinytalkohole, Vinylether, Acrylamide, mit Doppelbindungen funktionalisierte Typ-II-Photoinitiatoren eingesetzt, wobei diese Aufzählung nicht abschließend gemeint ist.

Inhalt der Erfindung ist ein Verfahren zur Herstellung einer Haftklebemasse, wie sie im vorstehenden beschrieben wurde. Bei diesem Verfahren wird eine durch radikalische Polymerisation erhältliche Polyacrylatlösung eingesetzt. Der Polyacrylatlösung wird nach erfolgter Polymerisation Wasserdampf als Schleppmittel zugesetzt und die mit dem Schleppmittel versetzte Polyacrylatlösung in einen Extruder geleitet, in welchem die Polyacrylatlösung einer Wasserdampfdestillation unterzogen wird. Durch die Aufkonzentration entsteht derart eine Polyacrylatmasse, welche aus der Schmelze weiterverarbeitet wird.

Zur Herstellung der Polyacrylatlösung, welche für die Aufkonzentration vorgesehen ist, wird eine freie oder kontrollierte radikalische Polymerisation durchgeführt. Die radikalische Polymerisation kann in Gegenwart eines organischen Lösungsmittels oder in Wasser oder in Gemischen aus organischen Lösungsmitteln, auch in Gemischen organischer Lösungsmittel mit Wasser, durchgeführt werden. Bevorzugt wird so wenig Lösungsmittel wie möglich eingesetzt. Die Polymerisationszeit beträgt-je nach Umsatz und Temperatur-zwischen 6 und 48 h. Das mittlere Molekulargewicht der Polymere variiert zwischen 300.000 und 2.000.000 g/mol, mehr bevorzugt zwischen 600.000 und 1.200.000 g/mol.
Zur Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Sehr bevorzugt wird ein Lösungsmittelgemisch aus Aceton und Isopropanol eingesetzt, wobei der Isopropanolgehalt zwischen 1 und 10 Gewichtsprozent liegt. Als Polymerisationsinitiatoren werden übliche radikalbildende Verbindungen, wie beispielsweise Peroxide und Azoverbindungen, eingesetzt. Auch Initiatorgemische können verwendet werden. Bei der Polymerisation können auch Thiole als weitere Regler zur Molekulargewichtssenkung und Verringerung der Polydispersität eingesetzt werden. Als weitere sogenannte Polymerisationsregler können z.B. Alkohole und Ether verwendet werden.

Die Polymerisation zur Herstellung der Polyacrylatlösung kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind.

Bei dem erfindungsgemäßen Verfahren wird das Lösemittel in einem Aufkonzentrationsextruder unter vermindertem Druck entfernt, wobei bevorzugt das Lösemittel in verschiedenen Vakuumstufen abdestilliert wird. Das Schleppmittel dient dabei dazu, Lösungsmittel, Verunreinigungen und leichtflüchtige Komponenten auszutragen.

In einer verbesserten Variante des erfinderischen Verfahrens wird im Anschluß an die Aufkonzentation in zumindest einem weiteren Schritt eine Nachreinigung durchgeführt, indem die aufkonzentrierte Polyacrylatmasse erneut mit demselben oder einem weiteren Schleppmittel versetzt wird und im Extruder eine weitere Trägerdampfdestillation durchgeführt wird, wobei bevorzugt jeweils höhere Temperaturen und niedrigere Vakuen gewählt werden als in dem vorhergehenden Destillationsschritt. Dabei wird nochmals von Lösemittel, Restmonomerresten und Verunreinigungen befreit.

Der Extruder im Aufkonzentrationsschritt ist bevorzugt ein gleich- oder gegenläufiger Doppelschnekkenextruder. Die Aufkonzentration und die Nachreinigungsschritte können dabei in ein- und demselben Extruder oder in einander nachgeschalteten Extrudern durchgeführt werden. Werden mehrere Extruder eingesetzt, so ist es günstig, für die Nachreinigungsschritte ebenfalls Doppelschneckenextruder zu verwenden, wobei auch die gleich- oder gegenläufig gewählt werden können.

Bei der Wasserdampfdestillation dient der Wasserdampf als Träger für die aus der Hattklebemasse zu entfernenden, mehr oder weniger flüchtigen Stoffe. Selbst viele hochsiedende mit Wasser nicht oder nur wenig mischbaren Stoffe lassen sich auf diese Weise schon bei etwa 100 °C destillieren, wenn man sie zusammen mit Wasser erhitzt oder während der Destillation heißen Wasserdampf hindurchleitet.
Eine Variante, mit der die Wasserdampfdestillation zur Entfernung höhersiedender Komponenten betrieben werden kann, wird durch die Destillation mit überhitztem Wasserdampf (bei Temperaturen von etwa 130°C) gegeben.

Nur durch das erfinderische Verfahren, insbesondere durch eine geeignete Kombination von Aufkonzentration und Nachreinigung, läßt sich die erfinderische Haftklebemasse mit den geforderten Ausgasungswerten erhalten.

Die Polyacrylatmassen können mit einem oder mehreren Additiven wie Alterungsschutzmitteln, Lichtschutzmitteln und Ozonschutzmitteln abgemischt sein, der Zeitpunkt des Zumischens für diese oder alle anderen Additive kann dabei entsprechend der Verfahrensschritte günstig gewählt werden. So werden bevorzugt Komponenten, die den Aufkonzentrationsprozeß nicht überstehen würden, im Nachhinein zugemischt.

Weiterhin können die Polyacrylatmassen mit einem oder mehreren Füllstoffen wie Fasern, Ruß, Zinkoxid, Titandioxid, Mikrovollkugeln, Kieselsäure, Silikaten und Kreide gefüllt sein, wobei auch der Zusatz von blokkierungsfreien Isocyanaten möglich ist.

In einem auschließenden Verfahrensschritt des erfindungsgemäßen Verfahrens wird die aufkonzentrierte und gegebenenfalls und vorteilhaft nachgereinigte Polyacrylatmasse auf ein Trägermaterial aufgetragen, in günstiger Vorgehensweise aus der Schmelze. Auf dem Trägermaterial wird die Polyacrylatmasse einer Vernetzungsreaktion unterzogen.
Hierfür ist es günstig, die Polyacrylatlösung nach der Polymerisation oder die Polyacrylatmasse nach dem Aufkonzentrationsschritt mit Vernetzern abgemischt werden.
Geeignete Vemetzersubstanzen in diesem Sinne sind bi- oder multifunktionelle Acrylate, bi- oder multifunktionelle Isocyanate oder bi-oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

In einer Weiterentwicklung dieses Verfahrens wird die Polyacrylatmasse nach der Destillation, aber vor der Vemetzung aus der Schmelze, also als Heißschmelzmasse, ein- oder doppelseitig auf ein Trägermaterial, dies können vorteilhaft Folien (PP, BOPP, PET, PVC, Polyester etc.), Gewebe (z. B. Baumwolle, Viskose, Viskoseacetat, Zellwolle), Vliese (beispielsweise aus Viskose oder Polyester), Filze, Schäume bzw. Schaumstoffe oder Trennpapier (Glassine, HDPE, LD-PE) sein, direkt aufgetragen oder umlaminiert, wobei das Trägermaterial bevorzugt eine sehr geringe Ausgasungsmenge (geringer 3 µg/g) besitzt; als ein Beispiel sei hier das schon oben erwähnte PET genannt. Die Vernetzung der Polyacrylatmasse findet dann bevorzugt direkt auf dem Trägermaterial statt.

Die Vernetzung der Polyacrylatmassen im erfinderischen Verfahren erfolgt durch Bestrahlung mit UV-Licht in einem Wellenlängenbereich von 250 bis 400 nm, und zwar mit der höchsten Emissionsdichte im Bereich oberhalb von 300 nm. Dabei soll Maßgabe sein, daß die Lichtleistung von Licht im Wellenlängenbereich von 300 nm bis 400 nm einen Anteil von mindestens 70 %, sehr bevorzugt 90 % an der insgesamt eingestrahlten Lichtleistung besitzt.

Vorteilhaft wird kurzzeitig mit dem Licht handelsüblicher Quecksilber-Hochdruck- oder - Mitteldrucklampen mit einer Leistung von beispielsweise 80 bis 400 W/cm bestrahlt. Um die Schädigung der Klebemasse zu vermeiden und keine zusätzlichen ausgasungsfähigen Komponenten zu erzeugen, wird harte UV-Strahlung in einem Wellenlängenbereich kleiner als 250 nm herausgefiltert. Die hauptsächliche Verwendung von weicher UV-A-Strahlung führt zu einer hohen Vemetzungsausbeute unter schonenden Bedingungen. Zusätzlich kann die zu vernetzende Polyacrylatmasse mit einer silikonisierten Folie abgedeckt werden, die den harten Wellenlängenbereich absorbiert. Durch diese Maßnahme wird gleichzeitig der Einfluß von Luftsauerstoff ausgeschlossen.
Hierbei oder als Alternative wird ein UV-Strahter eingesetzt, der mit mindestens 70 %, sehr bevorzugt 90 % seiner Emission in einem Wellenlängenbereich von 300 bis 400 nm, bevorzugt 320 bis 400 nm, also im UV-A-Bereich, operiert. Derartige UV-Strahlungsgeräte stellen beispielsweise die F15T8-BLB"-Lampen der Fa. Sylvana oder die "Sunlamp Performance 40W-R" der Fa. Philips dar.
Der Anteil des Wellenlängenbereichs von 250 bis 320 nm wird somit minimiert. Ferner kann dotiertes Glas eingesetzt werden, um eine Strahlenbelastung der Haftklebemasse in diesem Wellenlängenbereich durch die Filterwirkung des Glases herabzusetzen.

Für die UV-Vemetzung kann es angebracht sein, die Strahlerleistung der Bahngeschwindigkeit, mit der das beschichtete Trägermaterial durch den Strahlungsbereich geführt wird, anzupassen oder die Bahn bei langsamer Vorschubgeschwindigkeft teilweise abzuschatten, um die thermische Belastung zu verringern. Die Bestrahlungsdauer richtet sich nach Bauart und Leistung der jeweiligen Strahlungsgeräte.

Weiterhin kann das derart hergestellte Haftklebeband optional kurzzeitig erhitzt werden. Der Wärmeeintrag kann durch Bestrahlung, z. B. mit UV-, IR- oder Mikrowellenbestrahlung, erfolgen. Die Bestrahlungseinrichtungen sind vorteilhaft mit einer Absaugevorrichtung gekoppelt. Die Haftklebemasse wird bevorzugt durch IR-Bestrahlung im Wellenlängenbereich um 1700 cm⁻¹ erhitzt, wobei die Temperatur der Haftklebemasse zumindest 100 °C, bevorzugt 120 °C oder höher betragen, dabei aber einen oberen Grenzwert von 170 °C nicht überschreiten sollte.

Teil der Erfindung ist ebenfalls die Verwendung einer nach einem der zuvor beschriebenen Verfahren erhältlichen Haftklebemasse für ein Klebeband, insbesondere zur Anwendung in der Elektronikindustrie. Insbesondere beansprucht wird ein Klebeband mit einer ein- oder beidseitig auf ein Trägermaterial aufgetragenen Schicht einer Haftklebemasse, welche einen Ausgasungswert von weniger als 10 µg/g, bezogen auf das Gewicht der Haftklebemasse, besitzt.

Das Trägermaterial besitzt eine sehr geringe Tendenz zur Ausgasung, bevorzugt von weniger als 5 µg/g, gemessen unter den bereits genannten Bedingungen für die Ausgasungsmessungen. Noch bevorzugter werden Trägermaterialien mit wenigerals 3 µg/g verwendet.

Zur näheren Erläuterung der Erfindung sollen die nachfolgend dargestellten Versuchsreihen dienen, ohne sich durch die Wahl der Beispiele unnötig beschränken zu wollen.

### Beispiele

### Testmethoden

### Messung des Ausgasungswertes ("tesa-Methode"):

### Vorbereitung der Muster:

Die Klebemassen wurden auf PET-Folie im Hotmeltverfahren beschichtet. Der Masseauftrag betrug ca. 50 g/m². Nach oder vor der UV-Bestrahlung wurde eine etwa 40 cm² große Probenfläche aus dem Lappenmuster ausgeschnitten, mit Glasperlen (Durchmesser: 60 bis 80 um) bestreut und zusammengerollt in ein 25 ml Headspace-Glaschen überführt. Die Probe wurde 1 h bei 100 °C bei Normaldruck ausgeheizt und abschließend die leichtflüchtigen Bestandteile aus dem Dampfraum in den GC injiziert.

### Analyse:

Die leichtflüchtigen Bestandteile wurden über GC-MS ermittelt. Als Meßgeräte wurden verwendet:
GC: Hewlett Packard HP 5890 SERIES II
MS: Hewlett Packard HP 5989 A

Zur Messung wurde eine DB-5 Säule mit 60 m Länge, 0,25 mm Innendurchmesser und 1 µm Filmdicke eingebaut. Die Messung erfolgte mit einem Temperaturprogramm 50°C (3 min.)-15 °C/min-260 °C (2 min.). Als Trägergas wurde Wasserstoff (90 kPa) mit einem Strom von 1 ml/min benutzt. Das Splitverhältnis betrug 1:10.

Die Quantifizierung der Peaks im GC erfolgte gegen externe Standards.

### Bestimmung des Gelanteils

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der extraktion und nach der Extraktion durch Toluol wird der Gelwert als prozentuale Angabe des Gewichtsanteil des Polymers, der nicht in Toluol löslich ist, bestimmt.

### Ergebnisse

Kommerziell erhältliche Haflklebebänderbesitzen durchweg eine hohe Ausgasungsrate. Selbst Haftklebebänder, die thermisch vernetzt wurden, besitzen immer noch ein unbefriedigendes Ausgangsverhalten. Im folgenden werden die für Ihr geringes Ausgasungsverhalten ausgelobten UV-AC Resins™ (BASF AG) miteinander verglichen.

### Beispiel 1

UV-AC Resin 203™ (BASF AG) wurde mit einem Hotmelt-Coater auf einen PET-Träger mit 100 g/m² Masseauftrag beschichtet und anschließend das Ausgasungsverhalten nach obiger Methode ermittelt.

### Beispiel 2

UV-AC Resin 203™ (BASF AG) wurde mit einem Hotmelt-Coater auf einen PET-Träger mit 100 g/m² Masseauftrag beschichtet und anschließend mit einer UV-Anlage der Fa. Eltosch (Quecksilbermitteldruckstrahler, 120 W/cm, volle Leistung) 1 mal mit 10 m/min. bestrahlt. Anschließend wurde das Ausgasungsverhalten ermittelt.

### Beispiel 3

UV-AC Resin 203™ (BASF AG) wurde mit einem Hotmelt-Coater auf einen PET-Träger mit 100 g/m² Masseauftrag beschichtet und anschließend mit einer UV-Anlage der Fa. Eltosch (Quecksilbermitteldruckstrahler, 120 W/cm, volle Leistung) 4 mal mit 10 m/min. bestrahlt. Anschließend wurde das Ausgasungsverhalten ermittelt.

### Beispiel 4

UV-AC Resin 203™ (BASF AG) wurde in einem 3-Hals Kolben gefüllt und 2 h Wasserdampf hindurchgeführt. Anschließend wurde der gereinigte Hotmelt wiederum mit einem Hotmelt-Coater mit 100 g/m² Masseauftrag auf eine PET-Folie beschichtet und das Ausgasungsverhalten bestimmt.

### Beispiel 5

Es wurde analog Beispiel 4 vorgegangen. Das Klebeband wurde mit einer UV-Anlage der Fa. Eltosch (Quecksilbermitteldruckstrahler, 120 W/cm, volle Leistung) 1 mal mit 10 m/min. bestrahlt. Anschließend wurde das Ausgasungsverhalten ermittelt.

### Beispiel 6

UV-AC Resin 203™ (BASF AG) wurde zusammen mit Wasserdampf in einen Werner und Pfleiderer ZSK 30 Doppelschneckenaufkonzentrationsextruder mit einer Aufkonzentrationstemperatur von 70°C eingeführt. Ober drei unterschiedlichen Vakuumstufen wurde das WasserNerunreinigungsgemisch abgezogen. Anschließend wurde der gereinigte Hotmelt wiederum mit einem Hotmelt-Coater mit 100 g/m² Masseauftrag auf eine PET-Folie beschichtet und das Ausgasungsverhalten bestimmt.

### Beispiel 7

Eine entsprechend Beispiel 6 hergestellt Haftklebmassse wurde über eine Bügel-Düse der Fa. EDI auf einen PET-Träger mit einem Masseauftrag von 100 g/m² beschichtet. Eine Probe wurde anschließend mit 4 Philips Sunlamps Performance 40 W-R für 2 Minuten bestrahlt.

### Resultate

Die Ergebnisse der Ausgasungen sind in der Tabelle 2 zusammengefaßt:

**Tabelle 2**

| Beispiel | Flüchtige Anteile [µg/g] | Gelwert |
|---|---|---|
| 1 | 150 | 0 |
| 2 | 210 | 20 |
| 3 | 400 | 66 |
| 4 | 5 | 0 |
| 5 | 61 | 17 |
| 6 | 3 | 0 |
| 7 | 9 | 60 |

Die Ergebnisse zeigen, daß die für geringes Ausgasungsverhalten ausgelobten UV-AC Resins™ noch sehrgroße Mengen an leichtflüchtigen Anteilen enthalten. Verwendet man den UV AC-Resin 203™ zur Hotmelt-Beschichtung und vernetzt mit konventionellem UV-Licht nach, so besitzt das gesamte Haftklebeband noch flüchtige Bestandteile zwischen 210 und 400 µg/g Klebemasse. Als flüchtige Bestandteile wurden folgende Verbindungen detektiert:
Aceton, 2-Methyl-pentan, 3Methyl-pentan, Hexan, Ethylacetat, 2-Methyl-1-propanol, 1-Butanol, 2,4-Dimethyl-pentan, Cyclohexan, 3-Methylhexan, 1,2-Dimethylcyclopentan, Heptan, Methylcyclohexan, Toluol, 3-Methylheptan, Ethylbenzol, p-Xylol, 2-Propansäurebutylester, 1,3-Dimethylbenzol, Benzol, Ameisensäurebutylester, Butanal und Isobuten.

Die gemessenen Mengen sind eindeutig zu groß für Anwendungen in der elektrischen oder elektronischen Industrie. Dagegen zeigt der zusätzlich gereinigte UV AC-Resin™ mit Wasserdampf ein bedeutend geringeres Ausgasungsverhalten. Auch optisch verliert die Haftklebemasse ihre gelbe Elgenfärbung und ist wasserklar und transparent.
Zum Erreichen eines Haftklebebandes mit geringem Ausgasungsverhalten muß schonend vernetzt werden. Hierfür wird bevorzugt mit einem UV-A-Strahler UV-vernetzt. Wird dies nicht getan (Beispiel 5), so wird durch die harte UV-C-Strahlung die Acrylathaftklebemasse geschädigt und es entstehen Fragmente, wie z.B. n-Butanol und n-Butanal (Beispiel 5).

Zur Erreichung eines Haftklebebandes mit einem Ausgasungsverhalten geringer 10 µg/g muß neben der Wasserdampfdestillation zur Aufreinigung des Basis-Hotmelts selektiv mit UV-A Ucht bestrahlt und vernetzt werden (Beispiel 7).

Vorteil der vorliegenden Erfindung ist es, daß eine Haftklebemasse zur Verfügung gestellt wird, deren sehr geringes Ausgasungsverhalten auch nach einem Vernetzungsprozeß nicht signifikant ansteigt und welches daher erhebliche Vorteile für die Anwendung bietet. Das Ausgasungsverhalten bei nach herkömmlichen Verfahren aufkonzentrierten Haftklebemassen nimmt bei der Vemetzung durch Bestrahlung mit den üblichen, nicht gefilterten Quecksilberlampen erheblich wieder zu, wie auch die Beispiele 4 und 5 zeigen. Dabei wird der tolerierbare Grenzwert wieder überschritten. Das erfinderische Verfahren gibt nun das erste Mal die Möglichkeit, entsprechende niedrigausgasende vernetzte Haftklebemassen anzubieten. Durch die Trägergasdestillation im Extruder lassen sich dabei auch Polyacrylatlösungen aufkonzentrieren, welche zu höher viskosen Polyacrylatmassen führen. Ein Verfahren, welches einen Umpumprozeß beinhaltet, führt nicht zu diesen Ergebnissen.
Durch die vorteilhaft gewählten Monomerzusammensetzungen ist die Beanspruchung der Polyacrylatmassen im Extruder gering. Werden beispielsweise Polymere mit Molekulargewichten von etwa 1 Million (M_{w} ≈ 1.000.000 g/mol) eingesetzt, so beträgt der Molekulargewichtsabbau im Extruder dabei nur bis zu 5 %.

## Patentansprüche

1. Verfahren zur Herstellung einer Haftklebemasse aus Polymeren bzw. Copolymeren, welche zumindest überwiegend auf (Meth-)Acrylsäure und/oder deren Derivaten basieren, wobei die Haftklebemasse einen Ausgasungswert von weniger als 10 µg/g in Summe besitzt, gemessen nach der tesa-Methode,
wobei bei dem Verfahren eine durch radikalische Polymerisation erhältliche Polyacrylatlösung eingesetzt wird,
**dadurch gekennzeichnet, dass**
eine Aufkonzentration durchgeführt wird, bei welcher
- der Polyacrylatlösung nach erfolgreicher Polymerisation Wasserdampf als Schleppmittel zugesetzt wird,
- die mit dem Schleppmittel versetzte Polyacrylatlösung in einen Extruder geleitet wird, in welchem die Polyacrylatlösung einer Wasserdampfdestillation unterzogen wird,
- derart durch die Aufkonzentration eine Polyacrylatmasse entsteht, welche aus der Schmelze weiterverarbeitet wird,
- die aufkonzentrierte Polyacrylatmasse auf ein Trägermaterial aufgetragen wird und die Polyacrylatmasse auf dem Trägermaterial einer Vernetzungsreaktion unterzogen wird, wobei zur Vemetzung UV-Licht in einem Wellenlängenbereich von 250 nm bis 400 nm verwendet wird, mit der Maßgabe, dass die Lichtleistung von Licht im Wellenlängenbereich von 300 nm bis 400 nm einen Anteil von mindestens 70 % an der insgesamt eingestrahlten Lichtleistung besitzt.

2. Verfahren nach Anspruch 1, **dadurch gekennzeichnet, dass**
zur Herstellung der Polymere bzw. Copolymere zumindest folgende Monomere eingesetzt werden:
(a) 65 bis 100 Gew.-% Acrylsäure- und/oder Methacrylsäure-Derivate der allgemeinen Formel 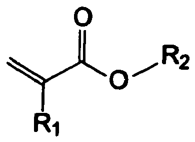 wobei R₁ = H oder CH₃ und R₂ = eine Alkylkette mit 2 bis 20 C-Atomen ist,
(b) 0 bis 35 Gew-% Vinylverbindungen mit funktionellen Gruppen.

3. Verfahren nach zumindest einem der vorangehenden Ansprüche, **dadurch gekennzeichnet, dass**
im Anschluss an die Aufkonzentration in zumindest einem weiteren Schritt eine Nachreinigung durchgeführt wird, indem die aufkonzentrierte Polyacrylatmasse erneut mit demselben oder einem weiteren Schleppmittel versetzt wird und im Extruder eine weitere Trägerdampfdestillation durchgeführt wird, wobei bevorzugt jeweils höhere Temperaturen und niedrigere Vakuen gewählt werden als in dem vorhergehenden Destillationsschritt.

4. Verfahren nach zumindest einem der vorangehenden Ansprüche, **dadurch gekennzeichnet, dass**
zumindest der Extruder im Aufkonzentrationsschritt ein gleich- oder gegenläufiger Doppelschneckenextruder ist.

5. Verfahren nach Anspruch 4, **dadurch gekennzeichnet, dass**
die Lichtleistung von Licht im Wellenlängenbereich von 300 nm bis 400 nm einen Anteil von mindestens 90 % an der insgesamt eingestrahlten Lichtleistung besitzt.

6. Klebeband, erhältlich nach einem Verfahren nach einem der vorangehenden Anspruche, insbesondere für die Verwendung in der Elektronikindustrie, mit einer ein- oder beidseitig auf ein Trägermaterial aufgetragenen Schicht einer Haftklebemasse aus Polymeren bzw. Copolymeren, welche zumindest überwiegend auf (Meth-)Acrylsäure und/oder deren Derivaten basieren, **dadurch gekennzeichnet, dass**
die Haftklebemasse einen Ausgasungswert von nicht mehr als 10 µg/g in Summe besitzt, gemessen nach der tesa-Methode, und das Trägermaterial einen Ausgasungswert von weniger als 5 µg/g besitzt.

## Claims

1. Process for preparing a pressure-sensitive adhesive composition comprising polymers and/or copolymers based at least predominantly on (meth)acrylic acid and/or derivatives thereof, said composition possessing an outgassing level of less than 10 µg/g in total, measured by the tesa method,
a polyacrylate solution obtainable by free-radical addition polymerization being used in the process, **characterized in that**
a concentration step is carried out, in which
- after successful polymerization, steam as entrainer is added to the polyacrylate solution,
- the entrainer-admixed polyacrylate solution is passed into an extruder in which said solution is subjected to a steam distillation,
- the concentration thus produces a polyacrylate composition which is processed further from the melt,
- the concentrated polyacrylate composition is applied to a backing material and the polyacrylate composition on the backing material is subjected to a crosslinking reaction, crosslinking being carried out using UV light in a wavelength range from 250 nm to 400 nm, with the proviso that the output of light in the wavelength range from 300 nm to 400 nm makes up at least 70% of the total irradiated light output.

2. Process according to claim 1, **characterized in that** the polymers and/or copolymers are prepared using at least the following monomers:
(a) from 65 to 100% by weight of acrylic and/or methacrylic acid derivatives of the general formula 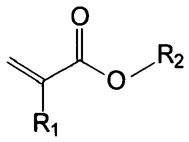 where R₁ = H or CH₃ and R₂ = an alkyl chain of 2 to 20 carbon atoms,
(b) from 0 to 35% by weight of vinyl compounds containing functional groups.

3. Process according to at least one of the preceding claims, **characterized in that**
in at least one step further following concentration, a postpurification is conducted by adding the same entrainer again, or a further entrainer, to the concentrated polyacrylate composition and carrying out a further carrier distillation in the extruder, preferably choosing in each case higher temperatures and lower vacuums than in the preceding distillation step.

4. Process according to at least one of the preceding claims, **characterized in that**
at least the extruder in the concentration step is a corotating or counterrotating twin-screw extruder.

5. Process according to Claim 4, **characterized in that** the output of light in the wavelength range from 300 nm to 400 nm makes up at least 90% of the total irradiated light output.

6. Adhesive tape which can be obtained according to a process according to one of the preceding claims, in particular for use in the electronics industry, comprising a film, applied to one or both sides of a backing material, of a pressure-sensitive adhesive composition comprising polymers and/or copolymers based at least predominantly on (meth)acrylic acid and/or derivatives thereof, **characterized in that** said composition possesses an outgassing level of not more than 10 µg/g in total, measured by the tesa method, and the backing material possesses an outgassing level of less than 5 µg/g.

## Revendications

1. Procédé de préparation d'une pâte auto-adhésive constituée par des polymères ou selon le cas des copolymères, qui sont, du moins principalement, à base d'acide (méth)acrylique et/ou ses dérivés, la pâte auto-adhésive présentant une valeur de dégazage inférieure à 10 µg/g au total, mesurée selon le procédé tesa, en utilisant lors du procédé une solution de polyacrylate pouvant être obtenue par polymérisation radicalaire, **caractérisé en ce qu'**on réalise une concentration dans laquelle
- la solution de polyacrylate est additionnée, après la polymérisation, de vapeur d'eau comme agent d'entraînement,
- la solution de polyacrylate additionnée de l'agent d'entraînement est introduite dans une extrudeuse, dans laquelle la solution de polyacrylate est soumise à une distillation à la vapeur d'eau,
- il se forme par la concentration une pâte de polyacrylate qui est transformée davantage à partir de la masse fondue,
- la pâte de polyacrylate concentrée est appliquée sur un matériau support et la pâte de polyacrylate sur le matériau support est soumise à une réaction de réticulation, en utilisant pour la réticulation de la lumière UV dans une plage de longueurs d'onde de 250 nm à 400 nm, à condition que la puissance lumineuse de la lumière dans la plage de longueurs d'onde de 300 nm à 400 nm représente une proportion d'au moins 70% de la puissance lumineuse irradiée totale.

2. Procédé selon la revendication 1, **caractérisé en ce qu'**on utilise pour la préparation des polymères ou selon le cas des copolymères au moins les monomères suivants :
(a) 65 à 100% en poids de dérivés de l'acide acrylique et/ou méthacrylique de formule générale 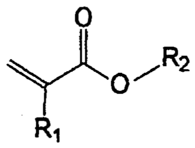 où R₁ = H ou CH₃ et R₂ représentent une chaîne alkyle comprenant 2 - 20 atomes de carbone,
(b) 0 à 35% en poids de composés de vinyle présentant des groupements fonctionnels.

3. Procédé selon au moins l'une quelconque des revendications précédentes, **caractérisé en ce qu'**on réalise après la concentration dans au moins une autre étape une post-purification, **en ce que** la pâte de polyacrylate concentrée est à nouveau mélangée avec le même agent d'entraînement ou un autre agent d'entraînement et on réalise dans l'extrudeuse une autre distillation à la vapeur, en choisissant de préférence à chaque fois des températures supérieures et des vides inférieurs à ceux de l'étape de distillation précédente.

4. Procédé selon au moins l'une quelconque des revendications précédentes, **caractérisé en ce qu'**au moins l'extrudeuse dans l'étape de concentration est une extrudeuse à double vis sans fin tournant dans le même sens ou dans un sens opposé l'une à l'autre.

5. Procédé selon la revendication 4, **caractérisé en ce que** la puissance lumineuse de a lumière dans la plage de longueurs d'onde de 300 nm à 400 nm représente une proportion d'un moins 90% de la puissance lumineuse irradiée totale.

6. Bande adhésive qui peut être obtenue par un procédé selon l'une quelconque des revendications précédentes, en particulier destinée à l'utilisation dans l'industrie électronique, avec une couche appliquée sur une ou deux faces d'un matériau support d'une pâte auto-adhésive en polymères ou selon le cas copolymères qui est du moins principalement à base d'acide (méth)acrylique et/ou ses dérivés, **caractérisée en ce que** la pâte auto-adhésive présente une valeur de dégazage qui n'est pas supérieure à 10 µg/g au total, mesurée selon le procédé tesa, et le matériau support présente une valeur de dégazage inférieure à 5 µg/g.
